(19) Europäisches Patentamt
European Patent Office
Office européen des brevets

(11) EP 3 960 808 A1

(12) **EUROPEAN PATENT APPLICATION**
published in accordance with Art. 153(4) EPC

(43) Date of publication:
**02.03.2022 Bulletin 2022/09**

(21) Application number: **20794107.1**

(22) Date of filing: **14.04.2020**

(51) International Patent Classification (IPC):
***C08K 5/32*** *(2006.01)* ***C08L 23/10*** *(2006.01)*

(52) Cooperative Patent Classification (CPC):
**C08K 5/32; C08K 5/49; C08L 23/10**

(86) International application number:
**PCT/JP2020/016438**

(87) International publication number:
**WO 2020/218090 (29.10.2020 Gazette 2020/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2019 PCT/JP2019/018032**

(71) Applicant: **Yupo Corporation**
**Tokyo 101-0062 (JP)**

(72) Inventors:
- **OHTA Takanori**
**Kamisu-shi, Ibaraki 314-0102 (JP)**
- **SUZUKI Tatsuya**
**Kamisu-shi, Ibaraki 314-0102 (JP)**

(74) Representative: **Zimmermann & Partner Patentanwälte mbB**
**Postfach 330 920**
**80069 München (DE)**

(54) **RESIN COMPOSITION AND RESIN SHEET**

(57) Provided is a resin composition having excellent heat resistance and flame retardance doubled as superior formability. The present invention provides a resin composition comprising: a propylene-based resin and/or an ethylene-based resin; a NOR-type HALS compound represented by formula (1) or formula (2); and a phosphorus compound having a flash point of 360°C or higher, wherein R is a group represented by formula (2-1) .



Printed by Jouve, 75001 PARIS (FR)

## Description

### Technical Field

The present invention relates to a resin composition and a resin sheet molded using this resin composition.

### Background Art

Plastics, by themselves, are inflammable materials. Thus, it is desirable to impart flameproof property or flame retardance to a plastic-made molding, such as a resin sheet. A high level of flame retardance (e.g., DIN4102, FMVSS-302) has been required for, in particular, flame-retardant wallpapers used as building materials, flameproof posters used in stores, store stickers, sheet materials used in home appliances, tag labels used in automobiles, glass stickers used in railroad cars, and so on.

Propylene-based resins have been known as a raw material useful for such a plastic-made molding. Unfortunately, when enhanced flame retardance is tried to be achieved using a propylene-based resin-containing resin composition, it has been necessary to, for instance, blend a halogen-based flame retardant or blend an inorganic flame retardant in a relatively large quantity.

Patent Literature 1 or 2 discloses, as a resin composition having flame retardance, a propylene-based resin composition obtained by blending a specific NOR-type HALS compound (NOR-type hindered amine-based light stabilizer) and a specific phosphorus compound without blending any halogen-based flame retardant or inorganic flame retardant.

### Citation List

### Patent Literature

Patent Literature 1: Japanese Translation of PCT International Application Publication No. 2015-510023
Patent Literature 2: Japanese Patent Laid-Open No. 2017-066299

### Summary of Invention

### Technical Problem

However, the propylene-based resin composition disclosed in Patent Literature 1 or 2 has a problem of heat resistance and as a result of which the quality of the resulting molded product is not fully satisfactory. In addition, from the viewpoint of molded product safety, a higher level of flame retardance has recently been sought.

Further, the majority of, for instance, phosphorus compounds used as flame retardants has been known to make the surface of the resulting molded product tackier. The tackier surface of the molded product causes various problems such as poor mold releasability during molding and contamination due to attachment to a roll. Thus, molding processability during molding, namely, formability is markedly deteriorated.

This necessitates a resin composition having excellent heat resistance and flame retardance doubled as superior formability.

Here, the present invention aims at solving the above problems. Specifically, the purpose of the invention is to provide a resin composition having excellent heat resistance and flame retardance doubled as superior formability.

### Solution to Problem

The present inventors have conducted intensive research to solve the above problems and, as a result, have found that the above problems can be resolved by using a resin composition comprising: a propylene-based resin and/or an ethylene-based resin; a NOR-type HALS compound with a specific structure; and a phosphorus compound having a specific flash point, wherein the content of the phosphorus compound is set to be within a prescribed range. Then, the invention has been completed.

Specifically, the invention provides the following various specific items.

[1] A resin composition comprising: a propylene-based resin and/or an ethylene-based resin; a NOR-type HALS compound represented by formula (1) or formula (2) below; and a phosphorus compound having a flash point of 360°C or higher,

[Chemical Formula 1]

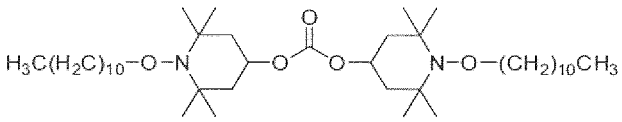

. . . (1)

[Chemical Formula 2]

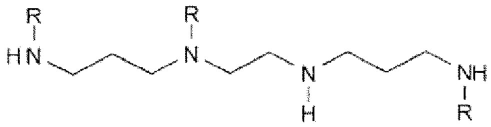

. . . (2)

wherein R is a group represented by formula (2-1):

[Chemical Formula 3]

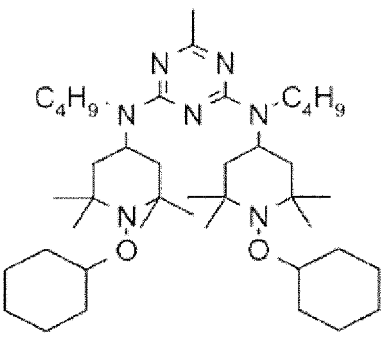

. . . (2 − 1)

.

[2] The resin composition according to [1], wherein a content of the phosphorus compound is from 0.1 to 7 parts by mass with respect to 100 parts by mass of the propylene-based resin and/or the ethylene-based resin.

[3] The resin composition according to [1] or [2], wherein a content of the NOR-type HALS compound is from 0.1 to 3 parts by mass with respect to 100 parts by mass of the propylene-based resin and/or the ethylene-based resin.

[4] The resin composition according to any one of [1] to [3], wherein the phosphorus compound has a degree of hydrolysis of 10 mass% or less.

[5] The resin composition according to any one of [1] to [4], wherein a content ratio of the phosphorus compound to the NOR-type HALS compound is, on a mass basis, from 0.5 to 30.

[6] The resin composition according to any one of [1] to [5], wherein the phosphorus compound comprises a phosphite ester compound and/or a phosphate ester compound.

[7] The resin composition according to any one of [1] to [6], comprising an inorganic filler.

[8] The resin composition according to any one of [1] to [7], wherein at least the propylene-based resin is comprised.

[9] A resin sheet comprising a layer formed using the resin composition according to any one of [1] to [8].

Advantageous Effects of Invention

The invention makes it possible to provide a resin composition having excellent heat resistance and flame retardance doubled as superior formability.

Description of Embodiments

Hereinafter, the invention will be described in detail. Note that the description of configuration requirements

described below is provided by way of example to illustrate the invention. The invention is not limited to these contents. Note that as used herein, the numerical range denoted by "-" means a range in which the numbers expressed before and after the "-" are inclusive as a lower limit and an upper limit, respectively.

[Resin Composition]

A resin composition of the invention comprises: a propylene-based resin and/or an ethylene-based resin; a NOR-type HALS compound represented by formula (1) or formula (2) below; and a phosphorus compound having a flash point of 360°C or higher,

[Chemical Formula 4]

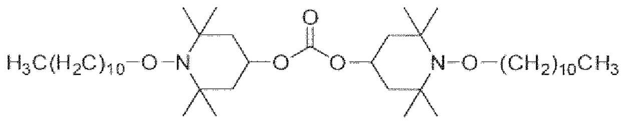

・・・(1)

[Chemical Formula 5]

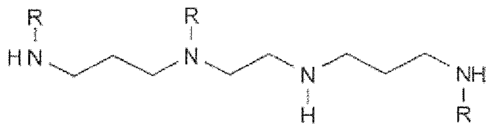

...(2)

wherein R is a group represented by formula (2-1):

[Chemical Formula 6]

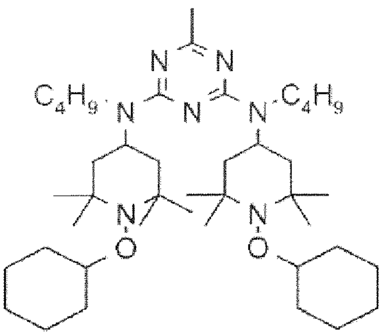

...(2-1)

Even if stored under high-temperature conditions for a given period, the resin composition with the above specific components has a less change in hue and a less change in resin fluidity. That is, the resin composition of the invention excels in heat resistance. This makes it possible to obtain a resin sheet having excellent flame retardance by using the resin composition. Further, the surface of the resulting resin sheet is not tacky, and the formability is superior.

Hereinafter, raw materials that can be used for the resin composition of the invention will be described in detail.

<Propylene-Based Resin>

The propylene-based resin can be used as a main material for the resin composition to impart film formation characteristics, water resistance, durability, lightweight properties, physical strength, and light permeability to a resin sheet formed using the resin composition.

The propylene-based resin is not particularly limited if propylene is used as a main monomer. Examples of the propylene-based resin include an isotactic polymer or a syndiotactic polymer obtained by subjecting propylene to homopolymerization. In addition, it is possible to use a propylene-α-olefin copolymer, which is a copolymer of propylene, as a main component, and α-olefin, for instance, ethylene, 1-butene, 1-pentene, 4-methyl-1-pentene, 1-hexene, 1-heptene, or 1-octene. The copolymer may have a two-component or multi (three or more)-component monomer composition, or may be a random copolymer or a block copolymer. Further, a propylene homopolymer and a propylene copolymer may be used in combination. Among them, a propylene homopolymer is easy to handle as a main raw material for a resin sheet and is preferable.

The propylene-based resin used may involve conventionally known various propylene-based resins. The melt flow rate (MFR) of the propylene-based resin is not limited and is usually 0.5 g/10 min or more and preferably 1.0 g/ 10 min or more and usually 30 g /10 min or less and preferably 20 g /10 min or less.

The propylene-based resin is less heat shrinkable than the below-described ethylene-based resin. Thus, a resin composition or a resin sheet using the propylene-based resin as a main material is unlikely to have a size deviation, and excels in processability/formability. Due to this, it is more preferable to use the propylene-based resin as a main material for a resin composition used for a resin sheet.

<Ethylene-Based Resin>

Like the above-described propylene-based resin, the ethylene-based resin can be used as a main material for the resin composition to impart film formation characteristics, water resistance, durability, lightweight properties, physical strength, and light permeability to a resin sheet formed using the resin composition.

The ethylene-based resin is not particularly limited if ethylene is used as a main monomer.

Examples of the ethylene-based resin include a crystalline ethylene-based resin such as high-density polyethylene with a density of from 0.940 to 0.965 g/cm$^3$, intermediate-density polyethylene with a density of from 0.920 to 0.935 g/cm$^3$, or low-density polyethylene with a density of from 0.900 to 0.920 g/cm$^3$. In addition, it is possible to use an ethylene-α-olefin copolymer, which is a copolymer of ethylene, as a main component, and α-olefin, for instance, propylene, 1-butene, 1-pentene, 4-methyl-1-pentene, 1-hexene, 1-heptene, or 1-octene. Further, the ethylene-based resin used may be, for instance, an ethylene-vinyl acetate copolymer or an ethylene-cyclic olefin copolymer. Among them, low-density polyethylene is preferable, and an α-olefin copolymer such as an ethylene/butene copolymer or an ethylene/octene copolymer is more preferable.

A material obtained by blending a propylene-based resin and an ethylene-based resin may be used as a main material for the resin composition used for a resin sheet. It is possible to use, as the propylene-based resin and the ethylene-based resin used for the blended material, for instance, any resins from the above-exemplified propylene-based resin(s) and ethylene-based resin(s).

<NOR-Type HALS Compound>

Inclusion of a NOR-type HALS compound with a specific structure in a resin composition of the invention makes it possible to prevent the propylene-based resin and/or the ethylene-based resin from being deteriorated due to, for instance, UV light, thereby imparting excellent weather resistance. In addition, the propylene-based resin and/or the ethylene-based resin can be prevented from being deteriorated under high-temperature conditions. This allows for a resin composition and a resin sheet with excellent heat resistance.

The NOR-type HALS compound is represented by formula (1) or formula (2) below:

[Chemical Formula 7]

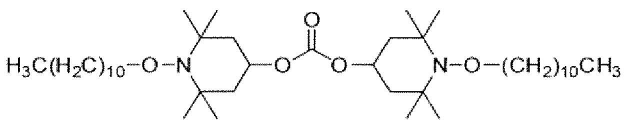

・・・(1)

[Chemical Formula 8]

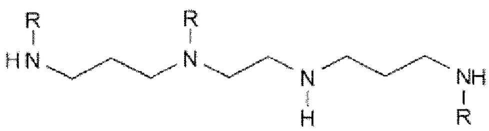

...(2)

wherein R is a group represented by formula (2-1):

[Chemical Formula 9]

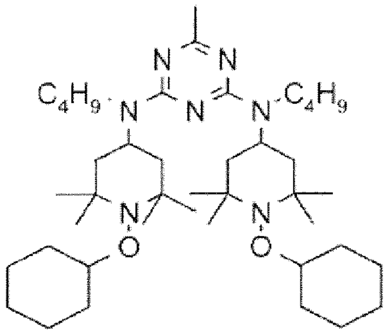

. . . (2 − 1)

The NOR-type HALS compound represented by formula (1) or formula (2) serves as an excellent radical scavenger when the compound-containing resin composition and resin sheet is burned and functions to stop a combustion reaction. That is, it is possible to impart excellent flame retardance to the resin composition and the resin sheet.

The NOR-type HALS compound represented by formula (1), in particular, can prevent coloring of the resin composition and/or the resin sheet more because the compound itself is more stable than the NOR-type HALS compound represented by formula (2). Further, the NOR-type HALS compound represented by formula (1) has better compatibility with a propylene-based resin and/or an ethylene-based resin than the NOR-type HALS compound represented by formula (2), so that the bleed-out is unlikely to occur and the formability is thus better.

In addition, the NOR-type HALS compound represented by formula (1) is liquid at room temperature. This is easy to elicit excellent heat resistance and flame retardance because the compound is uniformly micro-dispersed in the resin composition during melt-kneading of the propylene-based resin and/or the ethylene-based resin.

The content of the NOR-type HALS compound represented by formula (1) or formula (2) with respect to 100 parts by mass of the propylene-based resin and/or the ethylene-based resin in a resin composition of the invention is preferably 0.1 parts by mass or higher, more preferably 0.22 parts by mass or higher, still more preferably 0.5 parts by mass or higher, still more preferably 0.6 parts by mass or higher, and particularly preferably 0.7 parts by mass or higher. In addition, the content with respect to 100 parts by mass of the propylene-based resin and/or the ethylene-based resin is preferably 3 parts by mass or less, more preferably 2 parts by mass or less, still more preferably 1.5 parts by mass or less, and particularly preferably 1.15 parts by mass or less. If the content of the NOR-type HALS compound represented by formula (1) or formula (2) is the above lower limit or higher, the heat resistance of the resin composition is improved and the flame retardance of the resin sheet is improved. If the content of the NOR-type HALS compound represented by formula (1) or formula (2) is the above upper limit or less, it is possible to minimize the phenomenon that before the NOR-type HALS compound exerts the combustion preventive effect by its radical scavenger function, the NOR-type HALS compound itself is combusted. This can prevent a decrease in the flame retardance effect on the resin composition and/or the resin sheet. In addition, the above can also prevent a decrease in formability/printing suitability as caused by the bleed-out of the NOR-type HALS compound. Further, usage of the costly NOR-type HALS compound can be reduced, so that the cost performance is superior. Note that the NOR-type HALS compound represented by formula (1) or formula (2) may be used singly, or two kinds may be used in combination.

<Phosphorus Compound Having Flash Point of 360°C or Higher>

The phosphorus compound acts as a flame retardant to carbonize (make charcoal) and solidify combustible components of the propylene-based resin and/or the ethylene-based resin during their combustion to form an air-blocking film. This functions to stop a combustion reaction, serves as a radical scavenger like the NOR-type HALS compound, and works to dilute an oxygen level by phosphine gas generated when the phosphorus flame retardant is decomposed. The above phosphorus compound in a given amount and the NOR-type HALS compound represented by formula (1) or formula (2) may be used in combination to impart excellent flame retardance to the resin composition and the resin sheet.

The phosphorus compound used in the invention has a flash point of 360°C or higher, preferably 400°C or higher, and more preferably 430°C or higher. If the flash point of the phosphorus compound is the above lower limit or higher, higher flame retardance can be imparted to the resin composition and the resin sheet.

It is generally considered that a propylene-based resin and/or an ethylene-based resin has a flash point of from 300 to 450°C. However, the thermal decomposition seems to start at or near 250°C, and decomposition products

generated by the thermal decomposition cause ignition. In view of the above, in the case of mixing a phosphorus compound having a flash point approximately equal to or lower than the thermal decomposition initiation temperature of the propylene-based resin and/or the ethylene-based resin, the phosphorus compound itself is combusted before the combustion preventive effect is exerted. Thus, it is speculated that the flame retardance of the resin composition and/or the resin sheet may not be sufficiently improved. The above indicates that favorable flame retardance can be imparted by using, as a flame retardant, a phosphorus compound having a flash point higher than the thermal decomposition initiation temperature of the propylene-based resin and/or the ethylene-based resin, specifically, a phosphorus compound having a flash point of 360°C or higher.

In addition, the degree of hydrolysis of the phosphorus compound is 10 mass% or less, preferably 5 mass% or less, more preferably 3 mass% or less, and still more preferably 1.5 mass% or less. When a phosphorus compound is hydrolyzed, the molecule becomes smaller. This makes the hydrolyzed phosphorus compound move easily in a resin. As a result, the hydrolyzed phosphorus compound is likely to bleed out during stretching, heating, or light irradiation. If the degree of hydrolysis of the phosphorus compound is the above upper limit or less, it is possible to prevent a decrease in the flame retardance effect and/or a decrease in formability/printing suitability as caused by the bleed-out.

The phosphorus compound used in the invention is not particularly limited as long as the flash point is 360°C or higher. Examples of the phosphorus compound that can be used include a phosphorous acid compound, a phosphoric acid compound, a phosphite ester compound, or a phosphate ester compound. Among them, a phosphite ester compound or a phosphate ester compound is preferable. From the viewpoint of excellent effect of preventing the bleed-out of the phosphorus compound, a phosphite ester compound is more preferable.

As the phosphite ester compound, it is preferable to use a phosphite ester compound represented by the below-described formula (3).

In a phosphite ester compound represented by formula (3) below, $R^4$ and $R^5$ may be the same or different and each represent a substituted or unsubstituted $C_{1-30}$ alkyl group, a substituted or unsubstituted $C_{3-30}$ cycloalkyl group, or a substituted or unsubstituted $C_{6-30}$ aryl group.

[Chemical Formula 10]

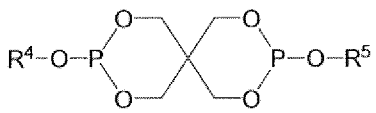

. . . (3)

Among them, $R^4$ and $R^5$ are, each independently, preferably a substituted or unsubstituted $C_{6-30}$ aryl group, more preferably a substituted or unsubstituted $C_{6-15}$ aryl group, and particularly preferably a substituted C6-15 aryl group.

In the case where $R^4$ and $R^5$ are each a substituted $C_{6-15}$ aryl group, the phosphite ester compound represented by formula (3) is preferably a compound represented by formula (4) below:

[Chemical Formula 11]

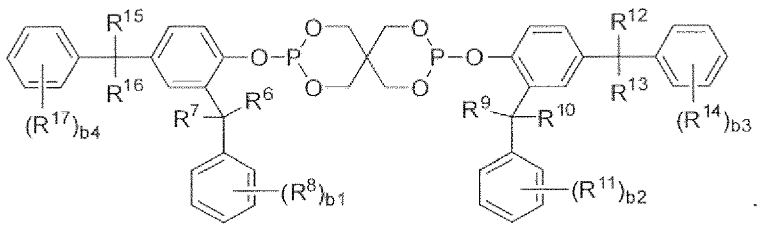

. . . (4)

wherein $R^6$, $R^7$, $R^9$, $R^{10}$, $R^{12}$, $R^{13}$, $R^{15}$, and $R^{16}$ each independently represent a hydrogen atom or a $C_{1-5}$ alkyl group; and $R^8$, $R^{11}$, $R^{14}$, and $R^{17}$ each independently represent a $C_{1-5}$ alkyl group, a $C_{6-15}$ aryl group, or an aralkyl group. The aralkyl group is a substituent in which one of hydrogen atoms in a $C_{1-5}$ alkyl group is replaced by a $C_{6-15}$ aryl group. In addition, b1 to b4 each independently represent an integer of 0 to 3. $R^6$, $R^7$, $R^9$, $R^{10}$, $R^{12}$, $R^{13}$, $R^{15}$, and $R^{16}$ are each preferably a methyl group, and b1 to b4 are preferably 0.

Specific examples of the phosphite ester compound represented by formula (3) or formula (4) include bis(2,4-dicumylphenyl)pentaerythritol diphosphite.

Note that the degree [mass%] of hydrolysis of the above phosphorus compound is a rate of increase in the mass of the phosphorus compound when 5 g of the phosphorus compound is allowed to stand for 400 h under humidified

and heated conditions at a relative humidity of 95% and at 50°C. This value indicates how easily the phosphorus compound is hydrolyzed. As the value increases, the hydrolysis proceeds more easily.

The hydrolysis of the phosphorus compound may cause a decrease in the flame retardance effect and/or a decrease in formability/printing suitability as caused by the bleed-out. Accordingly, a smaller value for the degree of hydrolysis of the phosphorus compound is preferable.

The above phosphorus compound may be used singly, or two or more kinds may be used in combination.

The content of the phosphorus compound with respect to 100 parts by mass of the propylene-based resin and/or the ethylene-based resin in a resin composition of the invention is preferably 0.1 parts by mass or higher, more preferably 0.25 parts by mass or higher, still more preferably 0.5 parts by mass or higher, still more preferably 0.8 parts by mass or higher, and particularly preferably 1.5 parts by mass or higher. In addition, the content with respect to 100 parts by mass of the propylene-based resin and/or the ethylene-based resin is preferably 7 parts by mass or less, more preferably 6 parts by mass or less, still more preferably 5.8 parts by mass or less, still more preferably 5 parts by mass or less, and particularly preferably 4 parts by mass or less.

If the content of the phosphorus compound is the above lower limit or higher, the NOR-type HALS compound may be used in combination to effectively improve heat resistance of the resin composition and flame retardance of the resin sheet. In addition, if the content of the phosphorus compound is the above upper limit or less, the bleed-out of the phosphorus compound in the resin sheet can be reduced more. This can prevent the resin sheet from becoming tacky, so that the formability is excellent.

That is, if the content of the phosphorus compound is set to be within a prescribed range, it provides a favorable balance among the heat resistance of the resin composition, the flame retardance of the resin sheet, and the formability given by the phosphorus compound bleed-out preventive effect.

Note that a resin composition of the invention may comprise a phosphorus compound having a flash point of less than 360°C as long as the compound does not impair the effects such as heat resistance, flame retardance, and formability.

<Content Ratio Between NOR-Type HALS Compound and Phosphorus Compound>

The content ratio of the phosphorus compound with respect to the NOR-type HALS compound in a resin composition of the invention [(the content of the phosphorus compound) / (the content of the NOR-type HALS compound)] on a mass basis is preferably 0.5 or higher, more preferably 0.9 or higher, still more preferably 1.0 or higher, still more preferably 1.1 or higher, and particularly preferably 1.2 or higher. In addition, the content ratio is, on a mass basis, preferably 30 or less, more preferably 20 or less, still more preferably 14 or less, still more preferably 6 or less, and particularly preferably 4 or less. That is, it tends to be preferable that the content of the phosphorus compound is relatively larger than the content of the NOR-type HALS compound. If the content ratio of the phosphorus compound with respect to the NOR-type HALS compound is within the above range, the flame retardance is particularly improved. If the content ratio of the phosphorus compound with respect to the NOR-type HALS compound is the above lower limit or higher, higher flame retardance can be imparted to the resin composition and/or the resin sheet. In addition, if the content ratio is the above upper limit or less, the effect corresponding to the blending amount can be obtained and the cost performance is favorable. Further, the bleed-out of the phosphorus compound can be prevented and the formability is also excellent. This is thus preferable.

<Inorganic Filler>

A resin composition of the invention optionally comprises an inorganic filler as long as the inorganic filler dose not inhibit the effects such as heat resistance and flame retardance. The inorganic filler is also called inorganic fine powder.

Inclusion of the inorganic filler can make the resulting resin sheet whiter or more opaque. In addition, the inorganic filler serves as a core of pore during stretch-molding of a resin sheet. This allows the resin sheet to be porous.

Thus, the inorganic filler-blended resin composition is useful as a raw material for what is called synthetic paper.

Meanwhile, if the inorganic filler is blended, the surface area of the resin composition or the resin sheet increases. This may facilitate a combustion reaction when the resin composition or the resin sheet is burned. Because of high specific thermal conductivity, when the resin composition or the resin sheet is ignited, the inorganic filler should melt the surrounding propylene-based resin and/or ethylene-based resin and may further function to promote combustion like a candle wick does.

The present inventors have found that if the content of the inorganic filler (in particular, calcium carbonate) with respect to 100 parts by mass of the propylene-based resin and/or the ethylene-based resin is up to about 30 parts by mass, desired heat resistance and/or flame retardance, for instance, are likely to be kept. Thus, a resin sheet having excellent heat resistance and flame retardance is readily obtained from the inorganic filler-containing resin composition.

From the above viewpoint, the content of the inorganic filler with respect to 100 parts by mass of the propylene-based resin and/or the ethylene-based resin is preferably 1 part by mass or higher and more preferably 5 parts by mass or higher and preferably 30 parts by mass or less, more preferably 25 parts by mass or less, and still more preferably 20 parts by mass or less. If the content of the inorganic filler is the above lower limit or higher, the resin sheet can be made whiter or more opaque, and is readily porous. In addition, if the content of the inorganic filler is the above upper limit or less, a decrease in the flame retardance is likely to be suppressed.

Specific examples of the inorganic filler include: fine powders, e.g., heavy calcium carbonate, light calcium carbonate, calcined clay, talc, zeolite, titanium oxide, barium sulfate, zinc oxide, magnesium oxide, diatomaceous earth, and silicon oxide; and hollow glass beads. Among them, there are many kinds of commercially available heavy calcium carbonate or light calcium carbonate in which a desired average particle size or particle size distribution thereof can be easily obtained. Also, optical properties such as whiteness or opacity of a resin sheet are easy to design. Thus, heavy calcium carbonate or light calcium carbonate is preferable. One kind among them may be used singly, or two or more kinds may be used in combination.

The average particle size of the inorganic filler is not particularly limited, and is preferably 0.1 μm or larger and more preferably 0.2 μm or larger and preferably 10 μm or smaller and more preferably 5 μm or smaller. If the average particle size of the inorganic filler is the above lower limit or larger, the resin sheet can be made whiter or more opaque, and is readily porous. In addition, if the average particle size is the above upper limit or smaller, it is easy to prevent the resin sheet from being broken during stretching due to contamination of crude particles.

Note that the average particle size of the inorganic filler refers to a value obtained by observing, under an electron microscope, a cutting surface of a resin sheet in the thickness direction, measuring the particle sizes of 100 inorganic filler molecules extracted randomly from the observed area, and calculating an average based on the above. The particle size of the inorganic filler in this case is determined from the maximum distance (maximum size) between two points on the particle contour.

<Additional Additives>

The resin composition may be optionally blended with a known additive(s) such as a dispersant(s), a heat stabilizer(s), an antioxidant(s), a UV stabilizer(s), an antiblocking agent(s), a nucleating agent(s), and/or a lubricant(s). In addition, as long as the effects of the invention are not inhibited, a light stabilizer other than the NOR-type HALS compound and/or a phosphorus compound having a flash point of less than 360°C may be blended.

A dispersant is used in order to highly disperse, for instance, the above inorganic filler into a resin composition. Examples of the dispersant include a silane coupling agent, higher fatty acid such as oleic acid or stearic acid, a metal soap, polyacrylic acid, polymethacrylic acid, maleic anhydride-modified polypropylene, or a salt thereof.

The content of the dispersant is not particularly limited. The dispersant is preferably blended, depending on the content of the inorganic filler, in a range of, for instance, from 0.01 to 5 parts by mass with respect to 100 parts by mass of the propylene-based resin and/or the ethylene-based resin. If the content of the dispersant is 0.01 parts by mass or more, the inorganic filler is likely to be uniformly micro-dispersed into the propylene-based resin and/or the ethylene-based resin. Besides, a decrease in the flame retardance tends to be readily suppressed. Further, if the content of the dispersant is 5 parts by mass or less, it is easy to prevent stickiness due to excessive dispersant and inhibition of light permeability.

In addition, a resin composition of the invention optionally comprises a thermoplastic resin(s) other than the propylene-based resin and/or the ethylene-based resin as long as the effects of the invention are not impaired. Examples of the thermoplastic resin(s) include crystalline olefin-type resins other than ethylene-based or propylene-based ones, e.g., polymethyl-1-pentene; amide-based resins, e.g., nylon-6, nylon-6,6, nylon-6,10, nylon-6,12; thermoplastic polyesters, e.g., polyethylene terephthalate or a copolymer thereof, polyethylene naphthalate, aliphatic polyesters; or thermoplastic resins, e.g., polycarbonate, atactic polystyrene, syndiotactic polystyrene, polyphenylene sulfide. Two or more kinds thereof may be mixed and used. Among them, crystalline olefin-type resins other than ethylene-based or propylene-based ones are preferable.

The content of the thermoplastic resin in a resin composition of the invention is acceptable as long as the effects of the invention are not impaired. The content with respect to 100 parts by mass of the propylene-based resin and/or the ethylene-based resin is usually 20 parts by mass or less and preferably 10 parts by mass or less.

[Resin Sheet]

A resin sheet of the invention includes a layer formed using the above resin composition.

The resin sheet may have a monolayer structure or a multilayer structure as long as the above layer is included.

In the case of the resin sheet with a multilayer structure, a resin composition included in each layer may be the same or different. The resin sheet may have a multilayer structure and each layer may include a different resin composition. In this case, at least one layer may be a layer formed using a resin composition of the invention. Alternatively, a plurality

of layers formed using a resin composition of the invention may be included. In this case, the resin composition included in each layer (i.e., the kind(s) or content(s) of compound(s) included in each layer) may be the same or different. For instance, if the content of the phosphorus compound at the outermost layer is relatively large, flame retardance of the resin sheet is likely to increase. In addition, if the content of the inorganic filler is relatively large, good appearance of synthetic paper is likely to be achieved.

The resin sheet of the invention may be a non-stretched sheet or stretched sheet. In the case of stretched sheet, either uniaxial or biaxial or multiaxial stretching is allowed.

The thickness of a resin sheet of the invention is not particularly limited as long as the thickness is set, if appropriate, depending on desired performance, and is preferably 30 μm or larger, more preferably 40 μm or larger, and still more preferably 50 μm or larger. In addition, the thickness of the resin sheet is preferably 500 μm or less, more preferably 300 μm or less, and still more preferably 200 μm or less. If the thickness of the resin sheet is the above lower limit or larger, the resin sheet has a sufficient mechanical strength. This can make it easy to prevent the resin sheet from being broken during stretch-molding or use. In addition, if the thickness of the resin sheet is the above upper limit or less, the resin sheet is not too heavy and tends to be easy to handle.

Note that the thickness of the resin sheet is a value measured according to JIS K7130: 1999. In the case of resin sheet with a multilayer structure, the value is measured using the whole multiple layers. The thickness of each layer in the case of resin sheet with a multilayer structure is calculated by observing a cross-section under an electron microscope, measuring a thickness ratio while the interface between the layers is judged by appearance, and multiplying the thickness of the entire resin sheet by the thickness ratio of each layer as measured above.

[Physical Properties of Resin Composition or Resin Sheet]

<Color Difference ΔE>

The color difference ΔE is an indicator that indicates a change in hue of a resin composition at a high temperature. The color difference ΔE indicates thermostability of the resin composition. If this value is low, it means that the resin composition has less coloring at a high temperature. The color difference ΔE in the invention is a value measured under conditions described in Examples below.

Specifically, first prepared are a sample obtained by heating a pellet of the resin composition in an oven set to an atmospheric temperature of 150°C for 7 days and a sample obtained by storing the pellet at room temperature for the same period. Next, a compression molding machine is used to subject about 5 g of each pellet sample to hydraulic press-molding at 230°C to give a disk-shaped evaluation-use resin sheet with a diameter of about 50 mm and a thickness of about 2 mm. For each of the resulting evaluation-use resin sheets, the lightness L* value and the color coordinates a* and b* values before or after the heating are determined using a color meter. Then, the color difference ΔE*ab in the L*a*b color system is calculated and defined as the color difference ΔE.

From the viewpoint of decreasing coloring, the color difference ΔE in the resin composition of the invention is preferably 15 or lower and more preferably 10 or lower. If the content of the phosphorus compound is decreased, the color difference ΔE in the resin composition tends to be kept low. Here, if the amount necessary to secure flame retardance is blended, the color difference ΔE in the resin composition is usually 0.5 or higher.

<Density>

From the viewpoint of maintaining the strength of resin sheet, the density of a resin sheet of the invention is preferably 0.5 g/cm$^3$ or higher and more preferably 0.6 g/cm$^3$ or higher. On the other hand, from the viewpoint of making the resin sheet light-weight, the density of the resin sheet is preferably 1.3 g/cm$^3$ or lower and more preferably 1.0 g/cm$^3$ or lower.

The density of a resin sheet of the invention can be calculated from the thickness of the resin sheet and an weighed value obtained by measuring the mass of a sample punched at a size of 10 cm × 10 cm in accordance with the protocol described in JIS K 7112: 1999 and by using the following calculation formula:

$$\rho = Wf / Tf$$

provided that ρ, Wf, and Tf are each denoted as follows:

p: density (g/cm$^3$) of the resin sheet;
Wf: grammage (g/cm$^2$) of the resin sheet; and
Tf: thickness (cm) of the resin sheet.

<Porosity>

From the viewpoint of making a resin sheet opaque or light-weight, the porosity of a resin sheet of the invention is preferably 1% or higher and more preferably 10% or higher. On the other hand, from the viewpoint of keeping the mechanical strength and/or flame retardance performance, the porosity of the resin sheet is preferably 60% or lower and more preferably 50% or lower.

The porosity of the resin sheet can be calculated from a ratio of an area occupied by pores in a certain region of a cross-section of the resin sheet as observed under an electron microscope. Specifically, a piece of a resin sheet to be measured is randomly cut; the piece is embedded in an epoxy resin and solidified; the piece is then cut, using a microtome, perpendicular to the surface direction of a film to be measured; and the cut surface is set to an observation surface and is attached to an observation sample table. Subsequently, gold or gold-palladium, for instance, is vapor-deposited on the observation surface; pores of the resin sheet are inspected at a given magnification (e.g., 500× to 3000× magnification) allowing for electron microscopy; and the region observed is incorporated as image data. The resulting image data is subject to image processing using an image analyzer. In this way, the area percentage (%) of pore portion in the certain region of the resin sheet is determined as the porosity (%). In this case, values measured while 10 or more random sites are observed may be averaged to give a porosity.

[Process for Producing Resin Composition/Resin Sheet]

A resin composition of the invention can be produced in accordance with a conventionally known process. Respective components are usually well-mixed and are then subjected to melt-kneading with a uniaxial or biaxial extruder. Alternatively, respective components may not be pre-mixed or only part thereof may be pre-mixed. They may then be supplied to the extruder by using a feeder and subjected to melt-kneading to prepare a resin composition. Further, a preparation obtained by blending part of the propylene-based resin and/or the ethylene-based resin with part of additional components may be melt-kneaded to prepare a masterbatch. Next, this may be blended with the rest propylene-based resin and/or ethylene-based resin and the rest additional components, and the mixture may then be melt-kneaded. Meanwhile, in the case of resin sheet with a multilayer structure, it is possible to prepare, depending on each layer, a resin composition for the formation of each layer. Note that the heating temperature during melt-kneading is usually from about 180 to 300°C as the cylinder temperature of the extruder. In particular, the cylinder temperature in a compression zone is usually from about 200 to 250°C. The temperature of resin discharged is usually from 200 to 250°C.

Next, the resulting resin composition may be melt-kneaded into a sheet shape to mold a resin sheet. Then, the resulting resin sheet is optionally stretched in at least one direction. In addition, the resulting resin sheet may be optionally annealed (heated), and a lug part is then cut off to prepare a resin sheet.

To manufacture a resin sheet of the invention, conventionally known various procedures may be used. For instance, in the case of resin sheet with a monolayer structure, the resin composition containing the above components may be melt-kneaded, extruded from a single die, and optionally stretched. In addition, in the case of resin sheet with a multilayer structure, a multilayer resin sheet obtained by layering a plurality of resin sheets may be manufactured by, for instance, a co-extruding method using a multilayer die with a feed block or a multi-manifold or an extruding lamination method using a plurality of dies. Further, a procedure in which the co-extruding method using a multilayer die and the extruding lamination method are combined may be used to manufacture a resin sheet.

The resin sheet may be stretched by various known processes. Specific examples include: a longitudinal stretching process using the difference in peripheral speed between roll members; a lateral stretching process using a tenter oven; a sequential biaxial stretching process in which the above longitudinal stretching and lateral stretching are carried out in this order or in the reverse order; a rolling process; a simultaneous biaxial stretching process in which a tenter oven and a linear motor are combined; or a simultaneous biaxial stretching process in which a tenter oven and a pantograph are combined. Additional examples include a simultaneous biaxial stretching process using a tubular method, a method of stretching an inflation film.

The stretching temperature is not particularly limited, and the propylene-based resin and/or the ethylene-based resin can be stretched within a preferable temperature range. Specifically, the preferable temperature is a temperature that is lower, by 2 to 15°C or more, than the melting point of the propylene-based resin and/or the ethylene-based resin. For instance, a resin composition of the invention may contain an inorganic filler. In this case, the resin composition is stretched at a temperature lower than the melting point of the propylene-based resin and/or the ethylene-based resin. This makes it possible to obtain a stretched resin sheet including pores having, for instance, the inorganic filler as a core. In this case, the resin sheet is a sheet made suitably opaque and light-weight. In addition, the stretching may be performed at a temperature that is equal to or higher than the glass transition temperature of the propylene-based resin and/or ethylene-based resin mainly used for the resin sheet (used at the highest mass ratio) and is lower, by 1 to 70°C, than the melting point of the crystalline propylene-based resin and/or ethylene-based resin. Also, the temperature may range from a temperature lower by 1°C to a temperature higher by 2°C than the melting point.

The stretching ratio of the resin sheet is not particularly limited, and may be determined, if appropriate, in view of, for instance, characteristics of the resulting resin sheet. The stretching ratio during longitudinal uniaxial stretching is preferably in a range of 2 to 8, more preferably in a range of 3 to 7, and still more preferably in a range of 4 to 6. In addition, the stretching ratio during lateral uniaxial stretching is preferably in a range of 2 to 12, more preferably in a range of 4 to 10, and still more preferably in a range of 6 to 9. Further, in the case of biaxial stretching, the area stretching ratio (the longitudinal ratio multiplied by the lateral ratio) is preferably in a range of 4 to 70, more preferably in a range of 10 to 60, and still more preferably in a range of 20 to 50.

In the case of resin sheet with a multilayer structure, how many stretching axes is used for the resin sheet included in each layer or what is the stretching ratio may be the same or different for each layer.

The following describes a preferable method of manufacturing a resin sheet with a monolayer structure.

First, the resin composition is melt-kneaded using an extruder, supplied to a single die, extruded into a sheet shape, and cooled to, for instance, 40 to 85°C, which is a temperature lower than the melting point of the propylene-based resin and/or the ethylene-based resin, to prepare a non-stretched resin sheet. Next, this non-stretched resin sheet is stretched at a factor of 3 to 10 in the longitudinal direction at a stretching temperature 2 to 15°C lower than the melting point of the propylene-based resin and/or the ethylene-based resin. This can produce a uniaxially stretched resin sheet oriented in the longitudinal direction. Then, this uniaxially stretched resin sheet is stretched at a factor of 4 to 12 in the lateral direction at a stretching temperature 2 to 15°C lower than the melting point of the propylene-based resin and/or the ethylene-based resin. This can produce a biaxially stretched resin sheet.

<Heat Treatment>

The stretched resin sheet is preferably subjected to heat treatment. The preferable heat treatment temperature is a temperature that is higher, by 1 to 15°C or more, than the melting point of the propylene-based resin and/or the ethylene-based resin. The heat treatment can promote crystallization of an amorphous portion of the propylene-based resin and/or the ethylene-based resin. This causes a decrease in the thermal shrinkage rate in the stretching direction, so that a change in the dimension of the resin sheet is lowered. The heat treatment process is carried out usually with a heated roll or in a heated oven. However, these processes may be combined.

<Surface Treatment>

The stretched resin sheet is optionally subjected to surface treatment. The surface treatment makes it possible to improve the secondary workability of the resin sheet. Examples of the surface treatment include oxidation treatment such as corona discharge treatment, flame treatment, plasma treatment, glow discharge treatment, or ozone treatment. In addition, the stretched resin sheet may be subjected to oxidation treatment, followed by coating with an anchor agent and an antistatic agent.

[Use of Resin Sheet]

Use of a resin sheet of the invention is not particularly limited, and the resin sheet is suitably applicable to use such as, in particular, printing papers, label papers, or reflection sheets.

Examples of printing use include flame-retardant wallpapers used as building materials, flameproof posters used in stores, decorative posters, or pop-up displays. Examples of label or seal use include store stickers used in stores, tag labels and harnesses used in automobiles, or glass stickers used in railroad cars. Examples of use requiring a light-reflecting function include light-reflective sheets for liquid crystal displays, light-reflective sheets for decorative signboards, light-reflective sheets for indoor lighting, multi-sheets for agriculture, reflectors for photography, or back covers for copiers.

Hereinafter, the resin sheet for printing use will be described in detail. Direct printing is possible for the resin sheet. However, it is preferable that an ink-receiving layer is disposed, as a printing layer, on at least one face of the resin sheet.

(Ink-Receiving Layer)

The ink-receiving layer exerts an effect of improving printability of the resin sheet, in particular, ink transfer performance and ink adhesion.

The ink-receiving layer preferably includes at least one of a binder or an antistatic agent. The ink-receiving layer further preferably includes a cross-linker. In addition, the ink-receiving layer may optionally include, for instance, an anti-blocking agent, a colorant, an antifoaming agent, an anti-mold agent, and/or a lubricant.

<Binder>

The binder is not particularly limited if the binder can adhere to and is applicable to a surface of the resin sheet.

Examples of the binder include ethylene-based copolymers, e.g., ethylene-vinyl acetate copolymers, ethylene-(meth)acrylic acid copolymers and (e.g., Zn, Al, Li, K, Na) metal salts thereof, ethylene-(meth)acrylic acid ($C_{1-8}$) alkyl ester copolymers; acid-modified polyolefins, e.g., maleic acid-modified polyethylene, maleic acid-modified polypropylene, maleic acid-modified ethylene/vinyl acetate copolymers; hydroxyl group-modified polyolefins, e.g., monohydroxy ($C_{3-6}$) alkyl-modified polyethylene; chlorinated polyolefins; polyurethanes, e.g., polyester polyurethane, polycarbonate polyurethane; polyethyleneimines and modified products thereof, e.g., polyethyleneimine, poly(ethyleneimine-urea); or modified polyamine polyamides, e.g., ethyleneimine adducts of polyamine polyamides, various (alkyl, cycloalkyl, allyl, aralkyl, benzyl, cyclopentyl) modified polyamine polyamides.

In order to impart, in particular, water resistance to the ink-receiving layer, a water dispersible (emulsion) binder may be selected.

The content ratio of the binder contained in the ink-receiving layer with respect to the total mass of the ink-receiving layer is not particularly limited, and usually 30 mass% or higher, preferably 40 mass% or higher, and more preferably 50 mass% or higher and usually 100 mass% or lower and preferably 99.5 mass% or lower.

<Antistatic Agent>

Examples of the antistatic agent include low-molecular-weight organic compounds, conductive inorganic compounds, what is called electronically conductive polymers, nonionic polymer-type antistatic agents, quaternary ammonium salt-type copolymers, or alkali metal salt-containing polymers. Specific examples include: low-molecular-weight organic compounds, e.g., monoglyceride stearate, alkyl diethanolamine, sorbitan monolaurate, alkyl benzene sulfonate, alkyl diphenyl ether sulfonate; conductive inorganic compounds, e.g., ITO (indium-doped tin oxide), ATO (antimony-doped tin oxide), graphite whisker; what is called electronically conductive polymers, in which conductivity is elicited by $\pi$ electrons in a molecular chain, e.g., polythiophene, polypyrrole, polyaniline; nonionic polymer-type antistatic agents, e.g., polyethylene glycol, polyoxyethylene alkylether, polyoxyethylene diamine; quaternary ammonium salt-type copolymers, e.g., polyvinylbenzyltrimethylammonium chloride, quaternary polydimethylaminoethyl methacrylate; or alkali metal salt-containing polymers, e.g., alkali metal ion adducts of alkylene oxide group- or hydroxyl group-containing polymers.

The surface resistivity of the antistatic agent-applied resin sheet is preferably from $1 \times 10^2$ to $1 \times 10^{13}$ $\Omega$ and more preferably from $1 \times 10^6$ to $1 \times 10^{12}$ $\Omega$.

The content ratio of the antistatic agent contained in the ink-receiving layer with respect to the total mass of the ink-receiving layer is not particularly limited, and usually 10 mass% or higher, preferably 15 mass% or higher, and more preferably 20 mass% or higher and usually 50 mass% or lower and preferably 40 mass% or lower.

<Cross-Linker>

The cross-linker functions to react with the binder or the antistatic agent or confine them in a reticular network formed by the cross-linker to immobilize them on a surface of the resin sheet. This results in the effect of increasing, for instance, adhesion and/or water resistance of printing applied to the resin sheet.

Examples of the cross-linker include bi- or multifunctional substances having, as a reactive functional group, a hydroxy (hydroxyl) group, a carboxy group, an epoxy group, an isocyanate group, an aldehyde group, an oxazoline backbone, or a carbodiimide backbone. Among them, preferred is a bisphenol A-epichlorohydrin resin, a polyamine polyamide-epichlorohydrin resin, an aliphatic epoxy resin, an epoxy novolac resin, an alicyclic epoxy resin, or a brominated epoxy resin. More preferred is an epichlorohydrin adduct of polyamine polyamide, monofunctional or multifunctional glycidyl ether, or a glycidyl ester compound.

The content ratio of the cross-linker contained in the ink-receiving layer with respect to the total mass of the ink-receiving layer is not particularly limited, and usually 15 mass% or higher and preferably 20 mass% or higher and usually 45 mass% or lower and preferably 40 mass% or lower. If the content ratio of the cross-linker is within the above range, adhesion and water resistance of the printing ink can be increased.

(To Layer Ink-Receiving Layer)

The ink-receiving layer is preferably formed by coating with a coating liquid. From the viewpoint of easy-to-manage steps, examples of a solvent used for the coating liquid include: water; an aqueous solvent, e.g., methyl alcohol, ethyl alcohol, isopropyl alcohol, acetone, methyl ethyl ketone; or a non-aqueous solvent, e.g., ethyl acetate, toluene, xylene.

It is preferable that the above components such as a binder are homogeneously dissolved or dispersed in the

above solvent, and the resulting coating liquid is used in a solution or dispersion state. From the viewpoint of safety or offensive odor, in particular, it is more preferable that each of the above components used is a water-soluble or water-dispersible component and the resulting coating liquid used is an aqueous solution or water dispersion.

From the viewpoint of reducing a drying load, the concentration of solid content in the coating liquid is preferably 0.1 mass% or higher and more preferably 0.2 mass% or higher. In addition, from the viewpoint of producing a uniform coating surface, the concentration is preferably 20 mass% or less and more preferably 10 mass% or less.

Examples of the coating procedure include a procedure using a coating device such as a gravure coater, a micro-gravure coater, a reverse coater, a braid coater, a Mayer bar coater, or an air knife coater.

The solvent used may be water or a water-soluble organic solvent. In this case, from the viewpoint of suppressing repulsion of the coating liquid and ensuring uniform coating, it is preferable that a surface of the resin sheet to be coated with the coating liquid is subjected beforehand to activation treatment such as corona discharge treatment. In addition, it is also preferable that a surface of the resin sheet is precoated with the above coating liquid and the resulting coating layer is dried to remove the solvent.

In the ink-receiving layer, the solid content coating mass per dried surface is preferably from 0.01 to 7 g/m$^2$, more preferably 0.01 to 5 g/m$^2$, and particularly preferably from 0.05 to 3 g/m$^2$. If the coating mass in the ink-receiving layer is within the above range, the ink transfer performance and adhesion are likely to increase. If the coating mass in the ink-receiving layer is the above upper limit or less, it is easy to prevent a decrease in adhesion of ink due to cohesion failure in the ink-receiving layer. On the other hand, if the coating mass in the ink-receiving layer is the above lower limit or higher, the ink transfer performance and adhesion are likely to be elicited.

<To Process Resin Sheet>

(Printing and Decoration)

A surface of a resin sheet of the invention, preferably a surface provided with the ink-receiving layer may be printed. Examples of printing information include photographic images, patterns, barcodes, manufacturer's name, distributor's name, characters, product name, or usage instructions.

Examples of the printing process include gravure printing, offset printing, flexographic printing, seal printing, or screen printing.

Also, in addition to printing, decoration such as transfer foil or hologram may be implemented. Examples of the decoration also include security elements such as threads. Both the printing and the decoration may be implemented.

Examples

Hereinafter, the invention will be described specifically with reference to Examples. Note that the materials, usage, ratios, processing content, processing procedures described in the following Examples, for instance, may be modified, if appropriate, without departing from the spirit of the invention. Thus, the invention is not limited to the Examples below.

<Example 1>

First, 92.8 parts by mass of propylene homopolymer (trade name: NOVATEC PP FY6, manufactured by Japan Polypropylene Corporation), 1 part by mass of NOR-type HALS compound with a chemical structure represented by formula (1) (trade name: ADEKASTAB LA-81, manufactured by ADEKA CORPORATION), 1.2 parts by mass of phosphorus compound having a flash point of 440°C or higher (trade name: Doverphos S-9228, manufactured by Dover Chemical Corporation), and 5 parts by mass of inorganic filler (trade name: TIPAQUE CR-60, manufactured by ISHIHARA SANGYO KAISHA, LTD.), as listed in Table 1, were mixed with a super mixer to prepare a resin composition of Example 1. The resulting resin composition was melt-kneaded with a biaxial kneader set to 230°C, and the kneaded material was extruded using a die into a strand shape. The resulting material was cooled in a water bath and cut with a pelletizer to yield a pellet.

Next, the resulting pellet was again melt-kneaded with an extruder set to 230°C, and the kneaded material was extruded using a T-die into a sheet shape. This sheet was cooled with a cooling device to 60°C to give a monolayer non-stretched resin sheet.

Then, this non-stretched resin sheet was heated to 143°C. After that, this resin sheet was uniaxially stretched at a stretching ratio of 4.2 in its transfer direction (longitudinal direction) by an inter-roll stretching process using the difference in peripheral speed between many roll members, and then cooled at 60°C to produce a uniaxially stretched resin sheet.

Subsequently, this uniaxially stretched resin sheet was re-heated using a tenter oven to 160°C. The resin sheet

was stretched at a stretching ratio of 8.5 in its width direction (lateral direction) by a clip stretching process using a tenter stretching machine, and was further subjected to annealing in an oven at 160°C for 2 sec while held by a clip. After cooled to 60°C, a lug part is cut off to prepare a sequentially biaxially stretched, monolayer resin sheet. This was obtained as a resin sheet of Example 1. The resin sheet of Example 1 had a thickness of 100 μm. Meanwhile, the transfer rate of the sheet was controlled to 120 m/min.

The above resulting pellet of the resin composition in Example 1 was used to evaluate heat resistance as described below. In addition, the resin sheet of Example 1 was used to evaluate formability and flame retardance as described below. Table 2 collectively shows the results.

<Examples 2 to 9 and Comparative Examples 1 to 9>

Substantially the same procedure as in Example 1 was repeated, except that the raw materials listed in Table 1 were used, but the ratio for the resin composition in Example 1 was changed to those designated in Table 2 and 3, to produce a resin composition and a resin sheet of each of Examples 2 to 9 or Comparative Examples 1 to 9.

The resulting resin compositions and resin sheets were used and likewise evaluated. Table 2 and 3 collectively show the results.

Note that in Tables 2 and 3, the NOR-type HALS compounds, phosphorus compounds, and inorganic fillers were abbreviated as in Table 1. Each abbreviation corresponds to the following NOR-type HALS compound, phosphorus compound, or inorganic filler. Note that NH2 is a NOR-type HALS compound with a chemical structure represented by formula (2).

NH1: Bis(1-undecaneoxy-2,2,6,6-tetramethylpiperidine-4-yl)carbonate (trade name: ADEKASTAB LA-81, manufactured by ADEKA CORPORATION).

NH2: Reaction product of 2,4-bis((1-cyclohexyloxy-2,2,6,6-tetramethylpiperidine-4-yl)butylamino)-6-chloro-s-triazine and N,N'-bis(3-aminopropyl)ethylene diamine (trade name: Flamestab NOR-116 FF, manufactured by BASF Japan Ltd.).

PH1: Bis(2,4-dicumylphenyl)pentaerythritol diphosphite (trade name: Doverphos S-9228, manufactured by Dover Chemical Corporation).

PH2: Compound having, as a main backbone, an ester structure with pentaerythritol and two phosphoric acid molecules (trade name: Fireguard FCX-210, manufactured by TEIJIN LIMITED).

PH3: Reaction product of Phenol, 4,4'-(propane-2,2-diyl)diphenol, and trichlorophosphine oxide (trade name: ADEKASTAB FP-600, manufactured by ADEKA CORPORATION).

PH4: Tris(2,4-di-tert-butylphenyl)phosphite (trade name: Irgafos-168, manufactured by BASF Japan Ltd.).

TI: Rutile-type titanium dioxide fine powder (trade name: TIPAQUE CR-60, manufactured by ISHIHARA SANGYO KAISHA, LTD.).

CA: Heavy calcium carbonate fine powder (trade name: SOFTON 1800, manufactured by BIHOKU FUNKA KOGYO CO., LTD.).

[Evaluation Procedures]

The physical properties of each resin composition or resin sheet obtained from the above Examples or Comparative Examples were evaluated by the following evaluation protocols and evaluation criteria.

<Thickness>

The thickness of the resin sheet obtained in each Example or Comparative Example was determined with a constant-pressure thickness meter (device name: PG-01J, manufactured by TECLOCK Co., Ltd.) in accordance with JIS K7130: 1999.

<Formability>

The formability of the resin sheet obtained in each Example or Comparative Example was evaluated as follows.

Frequent occurrence of bleed-out makes a surface of the resin sheet tacky. This causes various problems such as attachment to a roll and blocking between sheets during storage after molding, and as a result of which the production becomes difficult. Thus, the case where a surface of the resin sheet was tacky was graded as D.

In addition, even in the case where the resin sheet surface is not tacky and the production is possible, the bleed-out somewhat occurs. The bleed-out material, which is a substance bled out, is gradually transferred from a surface of the resin sheet to a roll. This roll is then contaminated. The roll should be cleaned depending on the degree of contamination. For the viewpoint of labor and production efficiency, it is desirable that the bleed-out material is not

transferred (attached) to the roll if possible. Accordingly, the case where no transfer of the bleed-out material to a roll was observed was graded as A; the case where the transfer was observed, but was partial was graded as B; and the case where the transfer occurred over a wide area was graded as C.

A: No surface of the resin sheet was tacky, and no transfer of the bleed-out material to a roll was observed.

B: No surface of the resin sheet was tacky, but the bleed-out material was transferred to some areas of a roll.

C: No surface of the resin sheet was tacky, but the bleed-out material was transferred over a wide area of a roll.

D: In a state where the resin sheet surface is tacky.

<Flame Retardance>

The flame retardance of the resin sheet obtained in each Example or Comparative Example was measured by the following flame retardance evaluation 1 (UL-94 VTM test) and flame retardance evaluation 2 (flameproof test 45-degree coil method).

<Flame Retardance Evaluation 1 (UL-94 VTM Test)>

The flame retardance of the resin sheet obtained in each Example or Comparative Example was measured in accordance with UL94 VTM test.

Specifically, the resin sheet obtained in each Example or Comparative Example was cut into a short shape with a size of 50 mm × 200 mm to prepare a resin sheet piece. This resin sheet piece was allowed to stand for 48 h or longer under conditions at a temperature of 23°C and a relative humidity of 50%. The resin sheet piece was marked at a position 125 mm from the lower end of its long side. Then, a tape was pasted on the resin sheet piece in a range of 125 mm to 200 mm from the lower end of its long side. After that, its short side was rolled while the diameter was set to 13 mm and bonded to give a cylindrical resin sheet piece. The resulting cylindrical resin sheet piece was used as a test piece. The upper end of the test piece was clamped by a clamp and suspended. Then, 0.05 g or less 100% cotton was placed at a position 300 mm below the lower end. A burner with a diameter of 10 mm was used with a 20 mm blue flame at 105 ml/min. The lower end of the test piece was positioned at a height of 10 mm from the tip of the flame. In this way, the flame was contacted. After 3-sec flame contact, whether or not melting of the test piece reached the marker, time t1 until fire spread on the test piece was extinguished, and whether the 100% cotton placed under the test piece was burned were checked. When melting of the test piece did not reach the marker at the first flame contact, the second flame contact was carried out on the same test piece in substantially the same manner as in the first time. The test piece was checked like in the first time (the time until fire spread on the test piece by the second flame contact was extinguished was defined as t2). A series of operation starting from cutting the resin sheet into a short shape as described above was repeated for 5 sets of the same resin sheet.

The total time of t1 and t2 was defined as T1 and the sum of the 5 sets of T1 was defined as T2. Then, the following grades were used for evaluation. In the following grades of the flame retardance, D or better is preferable; C or better is more preferable; B or better is still more preferable; and A is particular preferable.

A (VTM-0 and T2 is 25 sec or less): Melting of the test piece does not reach the marker; each of t1 or t2 is 10 sec or less and T2 is 25 sec or less; and the cotton placed under the test piece is not burned.

B (VTM-0 and T2 is longer than 25 sec and 50 sec or less): Melting of the test piece does not reach the marker; each of t1 or t2 is 10 sec or less and T2 is longer than 25 sec and 50 sec or less; and the cotton placed under the test piece is not burned.

C (VTM-1): Melting of the test piece does not reach the marker; each of t1 or t2 is 30 sec or less and T2 is 250 sec or less; and the cotton placed under the test piece is not burned.

D (VTM-2): Melting of the test piece does not reach the marker; but the cotton placed under the test piece is burned.

E: Melting of the test piece reaches the marker (the case where melting of the test piece reached the marker even when the cotton was not burned falls under grade E).

<Flame Retardance Evaluation 2 (Flameproof Test 45-Degree Coil Method)>

The resin sheet obtained in each Example or Comparative Example was subject to a flame retardance evaluation test using the "45-degree coil method" defined under Section 4(3) of the Fire Services Act enforcement regulations. Specifically, the 45-degree coil method was used to conduct a combustion test, and the number of flame contacts until everything was burned out was counted. Note that the flame retardance was evaluated using the following grades. In the following grades of the flame retardance, B or better is preferable and A is more preferable.

A: 4 times or more.

B: 3 times.
C: 2 times or less.

<Heat Resistance>

A pellet of the resin composition obtained in each Example or Comparative Example was heated for 7 days in an oven set to an atmospheric temperature of 150°C. The hue and MFR were measured between before and after the heating, and each change was used to evaluate the presence or absence of heat resistance of the resin composition.

(Color Difference ΔE)

Prepared were a sample obtained by heating a pellet of the resin composition obtained in each Example or Comparative Example in an oven set to an atmospheric temperature of 150°C for 7 days and a sample obtained by storing the pellet at room temperature for the same period. Next, a compression molding machine (MINI TEST PRESS MP-WC, manufactured by Toyo Seiki Seisaku-sho, Ltd.) was used to subject about 5 g of each pellet sample to hydraulic press-molding at 230°C to give a disk-shaped evaluation-use resin sheet with a diameter of about 50 mm and a thickness of about 2 mm.

Next, the resulting evaluation-use resin sheet was evaluated using a color meter (device name: touch panel-type color computer SM-T, manufactured by Suga Test Instruments Co., Ltd.) to determine each of the lightness L* value or the color coordinates a* and b* values before or after the heating. Then, the color difference ΔE*ab in the L*a*b color system was calculated and defined as the color difference ΔE. After that, the following grades were used for evaluation.

A: ΔE value is 15 or less.
B: ΔE value exceeds 15 and is 50 or less.
C: ΔE value exceeds 50.

(MFR Ratio)

Prepared were a pellet obtained by heating a pellet of the resin composition obtained in each Example or Comparative Example in an oven set to an atmospheric temperature of 150°C for 7 days and a pellet obtained by storing the pellet at room temperature for the same period. Next, each pellet was used to measure the MFR in accordance with JIS-K7210: 1999. Then, the ratio of the MFR value between before and after the heating (MFR value after heating / MFR value before heating) was determined, and the following grades were used for evaluation. The MFR ratio of 1.7 or less is preferable because the resin sheet extruded from a T-die is not sagged and the formability is favorable.

A: MFR ratio is 1.7 or less.

B: MFR ratio exceeds 1.7.

[Table 1]

| | Abbreviation | Content | Flash point (°C) |
|---|---|---|---|
| Propylene-based resin | PP | Propylene homopolymer (trade name: NOVATEC PP FY6, manufactured by Japan Polypropylene Corporation; MFR (at 230°C and a load of 2.16 kg): 2.5 g/10 min) | - |
| NOR-typeHALS compound | NH1 | Bis(1-undecaneoxy-2,2,6,6-tetramethylpiperidine-4-yl)carbonate (CAS No. 705257-84-7; trade name: ADEKASTAB LA-81, manufactured by ADEKA CORPORATION) | 250 < |
| | NH2 | Reaction product of 2,4-bis((1-cyclohexyloxy-2,2,6,6-tetramethylpiperidine-4-yl)butylamino)-6-chloro-s-triazine and N,N'-bis(3-aminopropyl)ethylene diamine (CAS No. 191680-81-6; trade name: Flamestab NOR-116 FF, manufactured by BASF Japan Ltd.) | 175 < |

(continued)

| | Abbreviation | Content | Flash point (°C) |
|---|---|---|---|
| Phosphorus compound | PH1 | Bis(2,4-dicumylphenyl)pentaerythritol diphosphite (CAS No. 154862-43-8; trade name: Doverphos S-9228, manufactured by Dover Chemical Corporation; the degree of hydrolysis: 0.7 mass%) | 440 < |
| | PH2 | Compound having, as a main backbone, an ester structure with pentaerythritol and two phosphoric acid molecules (trade name: Fireguard FCX-210, manufactured by TEIJIN LIMITED) | No flash point |
| | PH3 | Reaction product of Phenol, 4,4'-(propane-2,2-diyl)diphenol, and trichlorophosphine oxide (trade name: ADEKASTAB FP-600, manufactured by ADEKA CORPORATION) | 334 |
| | PH4 | Tris(2,4-di-tert-butylphenyl)phosphite (CAS No. 31570-04-4; trade name: Irgafos-168, manufactured by BASF Japan Ltd.; the degree of hydrolysis: 15 mass%) | 150-180 |
| Inorganic filler | TI | Rutile-type titanium dioxide fine powder (trade name: TIPAQUE CR-60, manufactured by ISHIHARA SANGYO KAISHA, LTD.; the average particle size: 0.21 μm) | - |
| | CA | Heavy calcium carbonate fine powder (trade name: SOFTON 1800, manufactured by BIHOKU FUNKA KOGYO CO., LTD.; dry pulverized product; the average particle size: 125 μm (air permeability method)) | - |
| For instance, the term "250 <" regarding the flash point (°C) indicates that the flash point is 250°C or higher | | | |

[Table 2]

| | | Example | | | | | | | | |
|---|---|---|---|---|---|---|---|---|---|---|
| | | 1 | 2 | 3 | 4 | 5 | 6 | 7 | 8 | 9 |
| Propylene-based resin | PP [parts by mass] | 92.8 | 91 | 89 | 89.4 | 89.75 | 94.5 | 87.8 | 84 | 91 |
| NOR-type HALS compound | NH1 [parts by mass] | 1 | 1 | 1 | 0.6 | 0.25 | 0.25 | 1 | 1 | - |
| | NH2 [parts by mass] | - | - | - | - | - | - | - | - | 1 |
| Content [parts by mass] of the NOR-type HALS compound with respect to 100 parts by mass of the propylene-based resin | | 1.1 | 1.1 | 1.1 | 0.7 | 0.3 | 03 | 1.1 | 1.2 | 1.1 |
| Phosphorus compound | PH1 [parts by mass] | 1.2 | 3 | 5 | 5 | 5 | 0.25 | 1.2 | 5 | 3 |
| | PH2 [parts by mass] | - | - | - | - | - | - | - | - | - |
| | PH3 [parts by mass] | - | - | - | - | - | - | - | - | - |
| | PH4 [parts by mass] | - | - | - | - | - | - | - | - | - |

(continued)

| | | Example | | | | | | | | |
|---|---|---|---|---|---|---|---|---|---|---|
| | | 1 | 2 | 3 | 4 | 5 | 6 | 7 | 8 | 9 |
| Content [parts by mass] of the phosphorus compound with respect to 100 parts by mass of the propylene-based resin | | 1.3 | 3.3 | 5.6 | 5.6 | 5.6 | 0.3 | 1.4 | 6.0 | 3.3 |
| (Content of the phosphorus compound) / (Content of the NOR-type HALS compound) | | 1.2 | 3.0 | 5.0 | 8.3 | 20.0 | 1.0 | 1.2 | 5.0 | 3.0 |
| Inorganic filler | TI [parts by mass] | 5 | 5 | 5 | 5 | 5 | 5 | - | - | 5 |
| | CA [parts by mass] | - | - | - | - | - | - | 10 | 10 | - |
| Formability | | A | A | B | B | B | A | A | c | B |
| Flame retardance | UL94 VTM test | B | A | A | A | D | E | B | A | A |
| | Flameproof coil method | A | A | A | A | A | B | A | A | A |
| Heat resistance | Color difference ΔE | A | A | A | A | A | A | A | A | B |
| | MFR ratio | A | A | A | A | A | A | A | A | A |

[Table 3]

| | | Comparative Example | | | | | | | | |
|---|---|---|---|---|---|---|---|---|---|---|
| | | 1 | 2 | 3 | 4 | 5 | 6 | 7 | 8 | 9 |
| Propylene-based resin | PP [parts by mass] | 93.8 | 90 | 92.8 | 91 | 89 | 92.8 | 89 | 92.8 | 89 |
| NOR-type HALS compound | NH1 [parts by mass] | - | - | 1 | 1 | 1 | 1 | 1 | 1 | 1 |
| | NH2 [parts by mass] | - | - | - | - | - | - | - | - | - |
| Content [parts by mass] of the NOR-type HALS compound with respect to 100 parts by mass of the propylene-based resin | | | | 1.1 | 1.1 | 1.1 | 1.1 | 1.1 | 1.1 | 1.1 |
| Phosphorus compound | PH1 [parts by mass] | 1.2 | 5 | - | - | - | - | - | - | - |
| | PH2 [parts by mass] | - | - | 1.2 | 3 | 5 | - | - | - | - |
| | PH3 [parts by mass] | - | - | - | - | - | 1.2 | 5 | - | - |
| | PH4 [parts by mass] | - | - | - | - | - | - | - | 1.2 | 5 |
| Content [parts by mass] of the phosphorus compound with respect to 100 parts by mass of the propylene-based resin | | 1.3 | 5.6 | 1.3 | 3.3 | 5.6 | 1.3 | 5.6 | 1.3 | 5.6 |
| (Content of the phosphorus compound) / (Content of the NOR-type HALS compound) | | - | - | 1.2 | 3.0 | 5.0 | 1.2 | 5.0 | 1.2 | 5.0 |
| Inorganic filler | TI [parts by mass] | 5 | 5 | 5 | 5 | 5 | 5 | 5 | 5 | 5 |
| | CA [parts by mass] | - | - | - | - | - | - | - | - | - |

(continued)

| | | Comparative Example | | | | | | | | |
|---|---|---|---|---|---|---|---|---|---|---|
| | | 1 | 2 | 3 | 4 | 5 | 6 | 7 | 8 | 9 |
| Formability | | A | B | D | D | D | D | D | B | c |
| Flame retardance | UL94 VTM test | E | E | A | A | A | D | A | E | E |
| | Flameproof coil method | C | C | A | A | A | B | A | B | B |
| Heat resistance | Color difference ΔE | A | A | A | A | A | A | A | A | A |
| | MFR ratio | A | A | A | A | A | A | A | A | A |

<Summary>

The results of evaluating the resin compositions and the resin sheets of Examples 1 to 9 have demonstrated that each resin composition or resin sheet of the invention excels in flame retardance and heat resistance, and have further demonstrated that the resin sheet surface is not tacky and the formability is thus excellent. By contrast, the NOR-type HALS compound-free resin composition or resin sheet of Comparative Example 1 or 2 generally had poor flame retardance. Besides, the resin compositions or the resin sheets of Comparative Examples 3 to 9 each used a phosphorus compound having a flash point lower than a prescribed value. Although having excellent heat resistance, they had poor flame retardance or their resin sheet surface was tacky. Thus, the formability was poor. Unlike the Examples, they did not have excellent heat resistance and flame retardance doubled as superior formability.

Even if an inorganic filler was added to a resin composition of the invention of the present application, the flame retardance and the heat resistance have been found to be suitably maintained.

The present application claims the priority of a PCT International Patent Application PCT/JP2019/018032, filed on April 26, 2019. All the disclosure of this international patent application is herein incorporated.

## Claims

1. A resin composition comprising:

    a propylene-based resin and/or an ethylene-based resin;
    a NOR-type HALS compound represented by formula (1) or formula (2), and
    a phosphorus compound having a flash point of 360°C or higher,

[Chemical Formula 1]

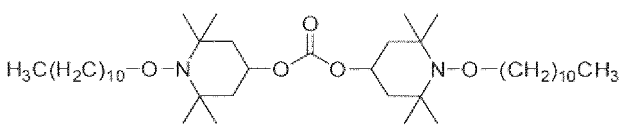

· · · (1)

or

[Chemical Formula 2]

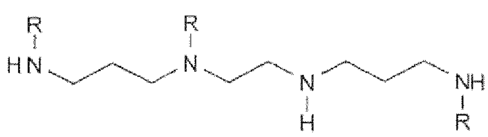

. . . (2)

wherein R is a group represented by formula (2-1):

[Chemical Formula 3]

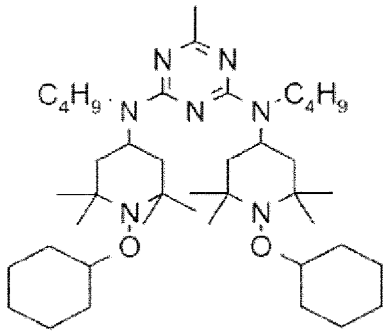

. . . (2 − 1)

2. The resin composition according to claim 1, wherein a content of the phosphorus compound is from 0.1 to 7 parts by mass with respect to 100 parts by mass of the propylene-based resin and/or the ethylene-based resin.

3. The resin composition according to claim 1 or 2,
wherein a content of the NOR-type HALS compound is from 0.1 to 3 parts by mass with respect to 100 parts by mass of the propylene-based resin and/or the ethylene-based resin.

4. The resin composition according to any one of claims 1 to 3, wherein the phosphorus compound has a degree of hydrolysis of 10 mass% or less.

5. The resin composition according to any one of claims 1 to 4, wherein a content ratio of the phosphorus compound to the NOR-type HALS compound is, on a mass basis, from 0.5 to 30.

6. The resin composition according to any one of claims 1 to 5, wherein the phosphorus compound comprises a phosphite ester compound and/or a phosphate ester compound.

7. The resin composition according to any one of claims 1 to 6, comprising an inorganic filler.

8. The resin composition according to any one of claims 1 to 7, wherein at least the propylene-based resin is comprised.

9. A resin sheet comprising a layer formed using the resin composition according to any one of claims 1 to 8.

## INTERNATIONAL SEARCH REPORT

International application No. PCT/JP2020/016438

**A. CLASSIFICATION OF SUBJECT MATTER**

C08K 5/32(2006.01)i; C08L 23/10(2006.01)i
FI: C08L23/10; C08K5/32

According to International Patent Classification (IPC) or to both national classification and IPC

**B. FIELDS SEARCHED**

Minimum documentation searched (classification system followed by classification symbols)
C08K5; C08L

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2018-522123 A (BASF SE) 09.08.2018 (2018-08-09) claims, paragraphs [0087], [0101] | 1-9<br>1-7, 9 |
| Y | CN 107266777 A (HEFEI HUAGAI PHOTOVOLTIAC TECH CO., LTD.) 20.10.2017 (2017-10-20) claims | 1-7, 9 |
| X | JP 2017-518430 A (CYTEC INDUSTRIES INC.) 06.07.2017 (2017-07-06) claims, paragraphs [0026], [0037], [0052], [0080], examples | 1-9 |
| Y | CN 102504715 A (NINGBO HUAFANG PACKAGE CO., LTD.) 20.06.2012 (2012-06-20) claims, example 4 | 1-6, 9 |
| Y | JP 2001-348724 A (MITSUBISHI RAYON CO., LTD.) 21.12.2001 (2001-12-21) claims, examples | 1-7, 9 |
| Y | JP 2002-337284 A (MITSUBISHI RAYON CO., LTD.) 27.11.2002 (2002-11-27) claims, examples | 1-7, 9 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>29 June 2020 (29.06.2020) | Date of mailing of the international search report<br>14 July 2020 (14.07.2020) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2020/016438

C (Continuation). DOCUMENTS CONSIDERED TO BE RELEVANT

| Category* | Citation of document, with indication, where appropriate, of the relevant passages | Relevant to claim No. |
|---|---|---|
| X | JP 2018-205517 A (YUPO CORPORATION) 27.12.2018 (2018-12-27) claims, examples | 1-6, 8, 9 |
| P, X | WO 2019/087982 A1 (YUPO CORPORATION) 09.05.2019 (2019-05-09) entire text | 1-9 |

Form PCT/ISA/210 (continuation of second sheet) (January 2015)

**INTERNATIONAL SEARCH REPORT**
Information on patent family members

International application No.
PCT/JP2020/016438

| Patent Documents referred in the Report | Publication Date | Patent Family | Publication Date |
|---|---|---|---|
| JP 2018-522123 A | 09 Aug. 2018 | US 2018/0201838 A1<br>claims, paragraphs [0154], [0168]<br>WO 2017/013028 A1<br>EP 3325547 A1<br>TW 201715030 A<br>CN 107849296 A<br>KR 10-2018-0024018 A | |
| CN 107266777 A | 20 Oct. 2017 | (Family: none) | |
| JP 2017-518430 A | 06 Jul. 2017 | US 2015/0315465 A1<br>claims, paragraphs [0028], [0039], [0054], [0109], examples<br>WO 2015/168389 A1<br>TW 201546242 A<br>KR 10-2016-0147279 A<br>CN 106471049 A | |
| CN 102504715 A | 20 Jun. 2012 | (Family: none) | |
| JP 2001-348724 A | 21 Dec. 2001 | US 2002/0015847 A1<br>claims, examples<br>US 2003/0138626 A1 | |
| JP 2002-337284 A | 27 Nov. 2002 | (Family: none) | |
| JP 2018-205517 A | 27 Dec. 2018 | (Family: none) | |
| WO 2019/087982 A1 | 09 May 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015510023 W
- JP 2017066299 A
- JP 2019018032 W

### Non-patent literature cited in the description

- *CHEMICAL ABSTRACTS,* 705257-84-7
- *CHEMICAL ABSTRACTS,* 191680-81-6
- *CHEMICAL ABSTRACTS,* 154862-43-8
- *CHEMICAL ABSTRACTS,* 31570-04-4